# EUROPÄISCHE PATENTSCHRIFT

(11) **EP 0 464 431 B1**
(45) Veröffentlichungstag und Bekanntmachung des Hinweises auf die Patenterteilung: **09.08.1995**
(21) Anmeldenummer: 91109827.5
(22) Anmeldetag: 15.06.1991
(51) Int. Cl.: G01B 5/00

(54) **Koordinatenmessgerät in Ständerbauweise**
Coordinate-measuring machine of the standing-axis type
Machine de mesure de coordonnées du type à axe vertical

(30) Priorität: 25.06.1990 DE 9007052 U
(43) Veröffentlichungstag der Anmeldung: 08.01.1992
(73) Patentinhaber: Firma Carl Zeiss, D-73446 Oberkochen (DE); CARL-ZEISS-STIFTUNG, HANDELND ALS CARL ZEISS, 73446 Oberkochen (DE)
(72) Erfinder: Leitenberger, Werner, W-7920 Heidenheim (DE)

(56) Entgegenhaltungen:
- EP-A- 0 157 176
- EP-A- 0 426 095

## Beschreibung

Die Erfindung betrifft ein Koordinatenmeßgerät in Ständerbauweise mit einem in zwei Koordinatenrichtungen waagerecht verschiebbaren Ständer, der einen höhenverstellbaren Meßarm trägt.

Koordinatenmeßgeräte mit diesem Aufbau werden in letzter Zeit verstärkt eingesetzt, da sie sich aufgrund ihrer kompakten Bauweise leicht für den Einsatz unter Fertigungsbedingungen kapseln lassen und wegen des gut zugänglichen Meßbereiches sehr bedienerfreundlich sind.

Bei dieser Bauweise ist es jedoch schwierig, die Meßgeschwindigkeit unter Beibehaltung der erzielbaren Führungsgenauigkeit zu steigern. Denn da der relativ schwere Ständer in zwei Koordinatenrichtungen beweglich ist, treten bei Beschleunigung in einer Richtung abhängig von seiner momentanen Position in der anderen Koordinatenrichtung außerachsiale Reaktionsmomente auf, die auf den Führungen abgestützt werden müssen. Dadurch werden die Führungen stark belastet.

Es ist aus der DE-PS 27 18 506 bekannt, das Portal von Koordinaten-Meßgeräten in Portalbauweise möglichst nahe an seinem Schwerpunkt anzutreiben, um Verkippungen bzw. Verdrehungen des Portals und daraus resultierende Meßfehler zu vermeiden. Hier ist das Portal selbst jedoch nur in einer Koordinatenrichtung verfahrbar, so daß der Antrieb einfach an einer festen Stelle des Maschinenbettes aufgebaut werden kann. Diese Lösung ist jedoch nicht für den Antrieb eines in zwei Koordinaten gleichzeitig beweglichen Ständers geeignet.

Aus der DE-PS 36 28 202 ist ein Koordinatenmeßgerät in Brückenbauweise bekannt, bei dem die in zwei Koordinatenrichtungen bewegliche, allerdings relativ leichtgewichtige Pinole bezüglich beider Koordinaten in ihrem Zentrum durch mit ihr gekoppelte Antriebe bewegt wird, die sich auf gegenüberliegenden Seiten der Brückenkonstruktion abstützen. Bei einem solchen, aufgrund des beschriebenen symmetrischen Aufbaues zwar sehr genau und schnell arbeitenden Gerätes, ist der Meßbereich jedoch schlecht zugänglich wegen der vier Säulen, auf der die gesamte Brückenkonstruktion ruht.

Es ist die Aufgabe der vorliegenden Erfindung, bei einem Koordinatenmeßgerät in Ständerbauweise mit einem in zwei Koordinatenrichtungen waagerecht verschiebbaren Ständer Antriebe und Führungen so anzuordnen, daß Belastungen der Führungen aufgrund außerachsialer Momente beim Antrieb in beiden Koordinatenrichtungen weitgehend vermieden sind.

Diese Aufgabe wird mit den im Kennzeichen des Anspruchs 1 angegebenen Maßnahmen dadurch gelöst, daß
- der den Ständer tragende Schlitten in einer ersten Koordinatenrichtung an einem Hilfsschlitten geführt ist, der seinerseits bezüglich der zweiten Koordinatenrichtung durch ein erstes Führungselement am feststehenden Teil des Gerätes geführt ist,
- ein erster Antrieb für die Bewegung des Hilfsschlittens an dem den Ständer tragenden Schlitten befestigt ist und am festen Teil eine weitere, parallel zur ersten Koordinatenrichtung ausgerichtete Führung vorgesehen ist, gegen die sich der Antrieb abstützt.

Die beschriebene Lösung geht wie in der Koordinatenmeßtechnik üblich von einem Konzept aus, bei dem die Führungen für die beiden Koordinatenrichtungen aufeinander aufbauen. Jedoch wirkt der Antrieb des primär bezüglich der ersten Koordinatenrichtung im festen Teil geführten Hilfsschlittens nicht auf diesen selbst, sondern auf den daran geführten, den Ständer tragenden Schlitten. Der Hilfsschlitten muß also nur noch die Antriebskräfte in X-Richtung aufnehmen, also in der Richtung, in der der Ständer an ihm selbst geführt ist, während er in der dazu senkrechten Y-Richtung einfach über die an ihn angebaute Führung für den Ständer mitgeschleppt wird. Da der Hilfsschlitten nur eine relativ geringe Masse besitzt, die Hauptmasse des Gerätes durch den Ständer selbst bzw. den ihn tragenden Schlitten gebildet wird, kann deshalb auch für die Bewegungsrichtung des Hilfsschlittens ein Antrieb im wesentlichen nahe bzw. im Schwerpunkt der anzutreibenden Teile sichergestellt werden.

Vorteilhaft im Sinne eines kompakten und die Belastung der Führung reduzierenden Aufbaues ist es, wenn der den Ständer tragende Schlitten direkt auf einer waagerechten Führungsplatte des festen Teils aufliegt. Für den Hilfsschlitten ist dann nur sehr wenig eigene Masse erforderlich, da er nur der Führung des Ständers in einer waagerechten Koordinate dient und nicht das Gewicht des Ständers mitaufnehmen muß.

Wenn es auch nicht möglich ist, den Antrieb bzw. seine Wirkungslinie exakt in den Schwerpunkt des aus dem Ständer und dem ihn tragenden Schlitten bestehenden Teils des Koordinatenmeßgerätes zu legen, so ist es doch zweckmäßig, die Wirkungslinie des Antriebs in eine Vertikalebene zu legen, die im wesentlichen durch den Schwerpunkt des durch den Antrieb bewegten Teils verläuft. Damit ist sichergestellt, daß keine störenden Reaktionsmomente bezogen auf die vertikale Achse des Ständers auftreten.

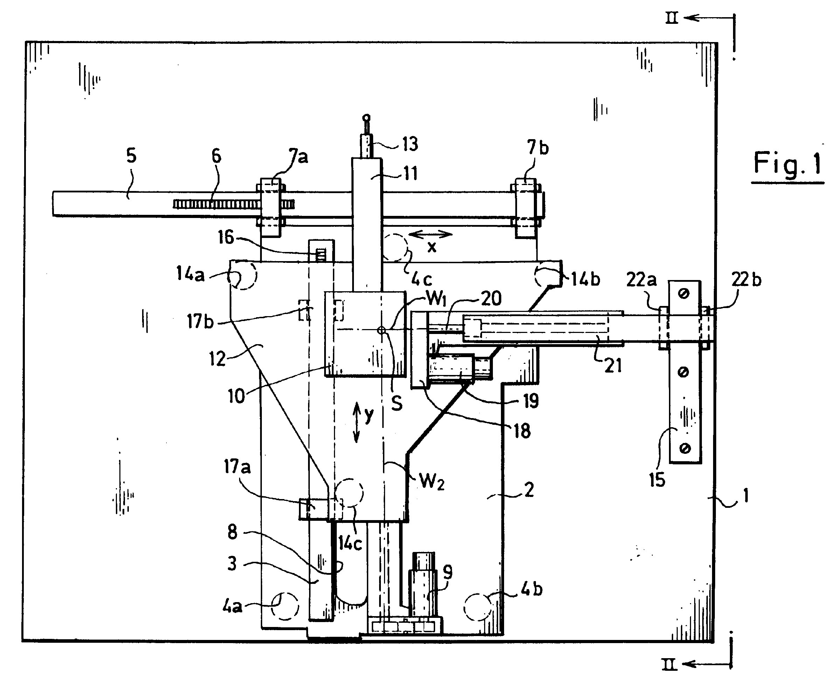

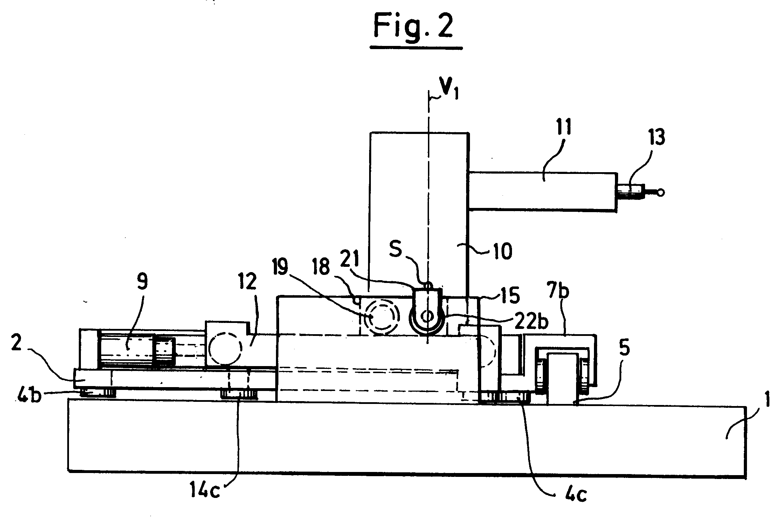

Weitere Vorteile der Erfindung ergeben sich aus der nachfolgenden Beschreibung eines Ausführungsbeispiels anhand der Figuren 1 und 2 der beigefügten Zeichnungen.
- Fig. 1: stellt das erfindungsgemäße Koordinatenmeßgerät bei abgenommener Verkleidung in Aufsicht dar;
- Fig. 2: ist eine Seitenansicht des Koordinatenmeßgerätes aus Fig. 1.

Die feststehende Maschinenbasis des in den Figuren dargestellten Koordinatenmeßgerätes wird durch einen beispielsweise aus Granit bestehenden Maschinentisch (1) gebildet, auf dem die beweglichen Teile des Koordinatenmeßgerätes entlang von an den Tisch (1) angebauten Führungen über Luftlager reibungsfrei gleiten.

Der in zwei Koordinatenrichtungen (X und Y) auf dem Tisch verfahrbare Ständer ist mit (10) bezeichnet und besitzt die Form einer rechteckigen Säule. An diesen Ständer (10) ist der in der Vertikalen verfahrbare Meßarm (11) des Gerätes gelagert, der an seinem vorderen Ende den Tastkopf (13) trägt, mit dem das zu vermessende Werkstück (hier nicht dargestellt) angetastet wird.

Der Ständer (10) ist auf einen Schlitten (12) montiert, der etwa die Form einer dreieckigen Platte besitzt und an den Enden über drei Luftlager (14a-c) direkt auf der Oberfläche des Maschinentisches (1) aufliegt. Der Schlitten (12), der nachstehend als Oberwagen bezeichnet wird, ist bezüglich der durch den Pfeil (Y) bezeichneten Koordinatenrichtung an einer Führungsleiste (3) auf einem Hilfsschlitten (2) geführt. Hierfür sind zwei jeweils gegeneinander verspannte Luftlagerpaare (17a und 17b) am Oberwagen vorgesehen. Die von den Luftlagerpaaren (17a, 17b) umgriffene Führungsleiste (3) auf dem Unterwagen trägt den Maßstab (16) zur Messung der Verschiebung des Ständers (10) in Y-Richtung. Der Hilfsschlitten (2) wird nachstehend als Unterwagen bezeichnet. Der Unterwagen (2) liegt ebenfalls über drei Luftlager, nämlich die Luftlager (4a, b und c) auf dem Maschinentisch (1) auf und ist seinerseits bezüglich der mit dem Pfeil (X) bezeichneten Koordinatenrichtung an einer Führungsleiste (5) auf dem Maschinenteil (1) geführt. Die Führungsleiste (5) trägt auch den Maßstab (6), mit dem die Bewegung des Unterwagens in Koordinatenrichtung (X) gemessen wird. Die Anbindung des Unterwagens an die Führungsleiste (5) erfolgt wie für den Oberwagen durch zwei an Umgriffen befestigte, gegeneinander verspannte Luftlagerpaare (7a und 7b).

Der Unterwagen ist in Richtung (Y) mit einem länglichen Schlitz (8) versehen, durch den das Luftlager (14c) des Oberwagens hindurchgreift.

Für den Antrieb des Ständers (10) in X-Richtung, d.h. in die Richtung, in der der Unterwagen (2) geführt ist, ist ein erster Antrieb vorgesehen, der auf dem Oberwagen (12) selbst montiert ist. Dieser Antrieb besteht aus einem Motor (19) und einem Getriebegehäuse (18) sowie einer Antriebsspindel (20). Die Spindel (20) arbeitet gegen eine Spindelmutter, die sich über ein Verbindungselement (21) und ein Luftlagerpaar (22a/22b) gegen eine zusätzliche Hilfsführung (15) auf dem Tisch (1) abstützt. Die Hilfsführung (15) erstreckt sich parallel zur Führung (3) auf dem Unterwagen (2) in Y-Richtung. Der Antrieb (18 - 21) ist so positioniert, daß seine Wirkungslinie (W1) im wesentlichen durch den mit (S) bezeichneten Schwerpunkt des aus Ständer (10), Meßarm (11) und Oberwagen (12) bestehenden, gemeinsam beweglichen Teils zwar nicht exakt hindurchgeht, da der Schwerpunkt der in Säule vertikal gesehen etwas höher liegt als die Tischebene. Der Schwerpunkt (S) und die Wirkungslinie (W1) liegen jedoch in der gleichen Vertikalebene (V1), so daß unabhängig von der Position des Ständers (10) entlang der Koordinate (Y) bezogen auf die Vertikalachse des Ständers (10) immer momentenfrei angetrieben wird.

Hierbei wird der relativ leichte Unterwagen (2) über die von den Luftlagern (17a, 17b) umgriffene Führungsleiste (3) einfach mitgenommen.

Für die Bewegung in Y-Richtung des Ständers (10) ist ein entsprechender Antrieb (9) vorgesehen. Dieser Antrieb (9) ist auf den Unterwagen montiert und mit seiner Wirkungslinie (W2) ebenfalls in einer den Schwerpunkt (S) enthaltenden Ebene angeordnet.

## Patentansprüche

1. Koordinatenmeßgerät in Ständerbauweise mit einem in zwei Koordinatenrichtungen (X, Y) waagerecht verschiebbaren Ständer (10), der den höhenverstellbaren Meßarm (11) trägt,
dadurch gekennzeichnet, daß
- der den Ständer (10) tragende Schlitten (12) in einer ersten Koordinatenrichtung (Y) an einem Hilfsschlitten (2) geführt ist, der seinerseits bezüglich der zweiten Koordinatenrichtung (X) durch ein erstes Führungselement (5) am feststehenden Teil (1) des Gerätes geführt ist,
- ein erster Antrieb (19) für die Bewegung des Hilfsschlittens (2) an dem den Ständer tragenden Schlitten (12) befestigt ist und am festen Teil eine weitere, parallel zur ersten Koordinatenrichtung (Y) ausgerichtete Führung (15) vorgesehen ist, gegen die sich der Antrieb (19) abstützt.

2. Koordinatenmeßgerät nach Anspruch 1, dadurch gekennzeichnet, daß der den Ständer (10) tragende Schlitten (12) mit drei Luftlagern (14a-c) direkt auf einer waagerechten Führungsplatte des festen Teils aufliegt.

3. Koordinatenmeßgerät nach einem der Ansprüche 1 oder 2, dadurch gekennzeichnet, daß der erste Antrieb (19) mit seiner Wirkungslinie in einer Vertikalebene (V) liegt, die im wesentlichen durch den Schwerpunkt (S) des aus dem Ständer (10) und dem ihn tragenden Schlitten (12) bestehenden, am Hilfsschlitten (2) geführten Teil des Koordinatenmeßgerätes verläuft.

4. Koordinatenmeßgerät nach einem der Ansprüche 1 bis 3, dadurch gekennzeichnet, daß ein zweiter Antrieb (9) für die Bewegung des den Ständer (10) tragenden Schlitten (12) am Hilfsschlitten (2) bzw. am Schlitten (12) befestigt ist bzw. angreift.

5. Koordinatenmeßgerät nach Anspruch 4, dadurch gekennzeichnet, daß der zweite Antrieb (9) mit seiner Wirkungslinie in einer zweiten Vertikalebene (V2) liegt, die ebenfalls im wesentlichen durch den Schwerpunkt (S) des aus dem Ständer (10) und dem ihn tragenden Schlitten (12) bestehenden, am Hilfsschlitten (2) geführten Teils des Koordinatenmeßgerätes verläuft.

## Claims

1. Coordinate measuring machine with horizontal-arm design comprising a column (10) horizontally mobile in two coordinate directions (X,Y), which carries the vertically adjustable measuring arm (11), characterized by the fact that
- the carriage (12) carrying the column (10) is guided in a first coordinate direction (Y) on an auxiliary carriage (2), which in turn is guided in the second coordinate direction (X) by a guiding element (5) on the stationary part (1) of the machine,
- a first drive (19) for moving the auxiliary carriage (2) is mounted on the carriage (12) carrying the column, and another guideway aligned parallel to the first coordinate direction (Y) is provided, against which the drive (19) acts at.

2. Coordinate measuring machine according to claim 1, characterized by the fact that the carriage (12) carrying the column (10) is seated by means of three air bearing (14a-c) directly on a horizontal guideway plate of the stationary part.

3. Coordinate measuring machine according to one of the claims 1 or 2, characterized by the fact that the first drive (19) displays its line of action in a vertical plane (V) which extends more or less through the center of gravity (s) of the machine part consisting of the carriage (12) and the column (10) it carries and guided along the auxiliary carriage (2).

4. Coordinate measuring machine according to one of the claims 1 to 3, characterized by the fact that a second drive (9) for the movement of the carriage (12) carrying the column (10) is mounted on or is acting against the auxiliary carriage (2) or the carriage (12) respectively.

5. Coordinate measuring machine according to claim 4, characterized by the fact that a second drive (9) displays its line of action in a second vertical plane (V2) which also extends more or less through the center of gravity (S) of the machine part consisting of the carriage (12) and the column (10) it carries and guided along the auxiliary carriage (2).

## Revendications

1. Appareil de mesure de coordonnées à montant, équipé d'un montant (10) pouvant être translaté selon deux axes horizontales (X, Y) et portant un bras de mesure réglable en hauteur (11),
caractérisé en ce que
- le chariot (12) portant le montant (10) est guidé, dans un premier axe (Y), le long d'un chariot auxiliaire (2) qui est à son tour guidé, dans le second axe (X), par un premier élément de guidage (5) disposé sur la partie fixe (1) de l'appareil,
- un premier entraînement (19) assurant le déplacement du chariot auxiliaire (2) est monté sur le chariot (12) portant le montant et qu'il est prévu sur la partie fixe un second élément de guidage (15), orienté parallèlement au premier axe (Y), contre lequel vient s'appuyer l'entraînement (19).

2. Appareil de mesure de coordonnées selon la revendication 1, caractérisé en ce que le chariot (12) portant le montant (10) repose directement sur la plaque support horizontale de la partie fixe au niveau de trois paliers d'air (14a-c).

3. Appareil de mesure de coordonnées selon la revendication 1 ou 2, caractérisé en ce que le premier entraînement (19) agit selon une ligne d'action qui coïncide avec un plan vertical (V) passant sensiblement par le centre de gravité (S) de l'ensemble composé du montant (10) et du chariot (12) qui le porte et guidé le long du chariot auxiliaire (2).

4. Appareil de mesure de coordonnées selon l'une quelconque des revendications 1 à 3, caractérisé en ce qu'un second entraînement (9) assurant le déplacement du chariot (12) portant le montant (10) est monté ou agit sur le chariot auxiliaire (2) ou le chariot (12).

5. Appareil de mesure de coordonnées selon la revendication 4, caractérisé en ce que le second entraînement (9) agit selon une ligne d'action qui coïncide avec un second plan vertical (V2) passant lui aussi sensiblement par le centre de gravité (S) de l'ensemble composé du montant (10) et du chariot (12) qui le porte et guidé le long du chariot auxiliaire (2).
